(19) Europäisches Patentamt
European Patent Office
Office européen des brevets

(11) **EP 4 302 555 B1**

(12) **EUROPEAN PATENT SPECIFICATION**

(45) Date of publication and mention
of the grant of the patent:
**08.07.2026 Bulletin 2026/28**

(21) Application number: **22712887.3**

(22) Date of filing: **01.03.2022**

(51) International Patent Classification (IPC):
*H04W 74/00* (2009.01)    *H04W 84/12* (2009.01)
*H04W 8/22* (2009.01)    *H04W 74/0816* (2024.01)

(52) Cooperative Patent Classification (CPC):
**H04W 84/12; H04W 74/006;** H04W 8/22;
H04W 74/0816

(86) International application number:
**PCT/EP2022/055108**

(87) International publication number:
**WO 2022/184693 (09.09.2022 Gazette 2022/36)**

(54) **TRANSMISSION AND RECEPTION OF CHANNEL ACCESS INFORMATION**

ÜBERTRAGUNG UND EMPFANG VON KANALZUGANGSINFORMATION

TRANSMISSION ET RÉCEPTION D'INFORMATIONS D'ACCÈS AU CANAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.03.2021 EP 21159981**

(43) Date of publication of application:
**10.01.2024 Bulletin 2024/02**

(73) Proprietors:
• **Sony Group Corporation**
**Tokyo 108-0075 (JP)**
• **Sony Europe B.V.**
**Weybridge, Surrey KT13 0XW (GB)**
Designated Contracting States:
**AL**

(72) Inventors:
• **HANDTE, Thomas**
**70327 Stuttgart (DE)**
• **CIOCHINA-KAR, Dana**
**70327 Stuttgart (DE)**
• **VERENZUELA, Daniel**
**70327 Stuttgart (DE)**

(74) Representative: **Witte, Weller & Partner
Patentanwälte mbB
Postfach 10 54 62
70047 Stuttgart (DE)**

(56) References cited:
US-A1- 2010 150 116    US-A1- 2013 279 427
US-A1- 2014 146 764    US-A1- 2017 202 023

**Description**

BACKGROUND

FIELD OF THE DISCLOSURE

The present disclosure relates to first and second communication devices and methods that are configured to communicate with each other. The present disclosure particularly relates to an access point (AP; herein also called first communication device) and a station (STA; herein also called second communication device) as used in a wireless communication system.

DESCRIPTION OF RELATED ART

Regulatory authorities and/or standards define rules for channel access (CA) for any communication device. The parameters may differentiate different access categories (AC) or priorities, i.e., the parameters are defined for each transmit queue separately. Those enhanced distributed channel access (EDCA) parameters include arbitration interframe space number (AIFSN), minimum contention window (CWmin), maximum contention window (CWmax) and transmit opportunity (TXOP) limit, hereinafter referred to as channel access parameters (CA parameters). ACs with high priority, such as voice or video, have a lower setting of AIFSN, CWmin and TXOP limit compared to ACs with lower priority, such as best effort or background.

An AP may define these CA parameters during association and/or continuously within a beacon. The AP broadcasts these CA parameters as common CA parameters, and any STA within the basic service set (BSS) of the AP is required to comply with these common CA parameters, i.e., to use them. STAs are mandated to update these CA parameters once they receive new CA parameters from the AP within e.g. a beacon frame.

The "background" description provided herein is for the purpose of generally presenting the context of the disclosure. Work of the presently named inventor(s), to the extent it is described in this background section, as well aspects of the description which may not otherwise qualify as prior art at the time of filing, are neither expressly nor impliedly admitted as prior art against the present disclosure.

US 2010/150116 A1 discloses a contention based communications channel access method that emulates scheduled access by dynamically updating EDCA parameters for groups of member stations in a WLAN.

US 2017/202023 A1 discloses a method for configuring channel access parameters in a wireless communication system that includes determining, at an access point, EDCA parameter for a first subset of stations of a plurality of stations, the first subset of stations capable of transmitting multi-user uplink transmissions. The method further includes generating an information element including the EDCA parameter. The method further includes transmitting the information element such that the information element is decodable by the first subset of stations and not by a second subset of stations of the plurality of stations.

US 2013/279427 A1 discloses a method that includes in response to receiving a modified EDCA parameter set IE at a station, determining a value of an EDCA parameter based on a delta value in the modified EDCA parameter set IE and based on a base value of the EDCA parameter.

SUMMARY

It is an object to provide communication devices and methods by which key performance indicators (KPIs), such as throughput and/or latency, of the communication between the communication devices can be improved. It is a further object to provide a corresponding computer program for implementing said communication methods.

The present invention defines a first communication device configured to operate as access point according to independent claim 1 and a corresponding method according to independent 13, a second communication device configured to operate as a station according to independent claim 12 and a corresponding method according to independent 14 as well as a computer program according to independent claim 15. Preferred embodiments are defined in the dependent claims.

According to aspect of the present disclosure there are provided a first communication device and a second communication device as defined in the claims.

According to still further aspects a computer program comprising program means for causing a computer to carry out the steps of the methods disclosed herein, when said computer program is carried out on a computer.

Embodiments are defined in the dependent claims. It shall be understood that the disclosed communication methods the disclosed computer program and the disclosed computer-readable recording medium have similar and/or identical further embodiments as the claimed communication devices and as defined in the dependent claims and/or disclosed herein.

It has been found that one or more of the common CA parameters, generally set by an AP for use by all STAs within a BSS, may not be suitable for certain applications and may not be optimal in terms of KPIs, such as throughput and/or latency. STA specific setting of CA parameters other than a BSS-wide (i.e. global) setting, as presented according to the present disclosure, helps to improve one or more of such KPIs. Thus, instead of having common CA parameters that are valid for all STAs within a BSS, individual CA parameters are used that can be assigned to a one or more particular STAs, i.e., each STA or each group of STAs can get its own individual setting of CA parameters.

The foregoing paragraphs have been provided by way of general introduction, and are not intended to limit the scope of the following claims. The described embodiments, together with further advantages, will be best understood by reference to the following detailed description taken in conjunction with the accompanying drawings.

BRIEF DESCRIPTION OF THE DRAWING

A more complete appreciation of the disclosure and many of the attendant advantages thereof will be readily obtained as the same becomes better understood by reference to the following detailed description when considered in connection with the accompanying drawings, wherein:

Fig. 1        shows a diagram illustrating an example of channel access timing depending on priorities;

Fig. 2        shows a diagram of a typical RTS/CTS exchange to protect a TXOP;

Fig. 3        shows an exemplary EDCA parameter set differentiating ACs and PHYs;

Fig. 4        shows diagrams illustrating a conventional CA parameter update operation;

Fig. 5        shows diagrams illustrating an example of CWmin adjustment and its impact to latency;

Fig. 6        shows diagrams illustrating the hidden node problem in OBSS and IBSS;

Fig. 7        shows a diagram illustrating a communication system including a first communication device and a second communication device according to the present disclosure as well as a third communication device;

Fig. 8        shows a flow chart of an embodiment of a first communication method of the first communication device according to the present disclosure;

Fig. 9        shows a flow chart of an embodiment of a second communication method of the second communication device according to the present disclosure;

Fig. 10      shows diagrams illustrating the common CA parameter update operation according to an embodiment of the present disclosure;

Fig. 11      shows the individual CA parameter update operation according to an embodiment of the present disclosure;

Fig. 12      shows diagrams illustrating CA parameter update for legacy STAs and STAs that support individual CA parameters according to the present disclosure;

Fig. 13      shows diagrams illustrating individual CA parameter allocation to legacy STAs;

Fig. 14      shows diagrams illustrating the operation using a suggestion and request of (new) individual CA parameters according to the present disclosure;

Fig. 15      shows a diagram illustrating an embodiment suggesting multiple individual CA parameters;

Fig. 16      shows a diagram illustrating the relation between CWmin and TXOP limit imposed by a fairness metric;

Fig. 17      shows a diagram of an AP multi-link device (MLD) connected to a non-AP MLD over two links and a legacy STA via one link;

Fig. 18      shows a diagram illustrating the relation between CWmin and TXOP limit imposed by a fairness metric in case of an AP MLD as shown in Fig. 17;

Fig. 19    shows a diagram illustrating an MLD scenario with different CA parameters over links with fairness setting in place and non-AP MLDs; and

Fig. 20    shows an example of common CA parameter set used in broadcast or unicast.

DETAILED DESCRIPTION OF THE EMBODIMENTS

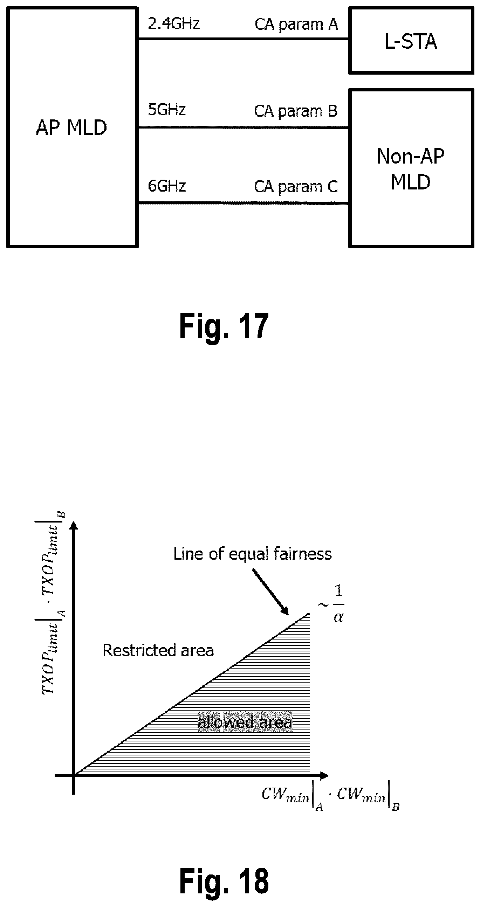

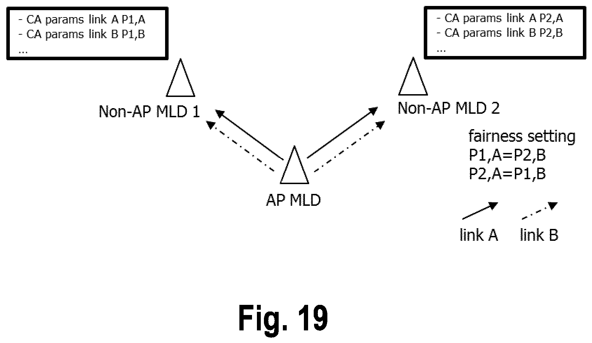

In the following the invention is best understood in view of figures 17 and 19. The remaining embodiments, aspects and examples disclosed below are included for illustrative purpose and for facilitating the understanding of the invention.

Conventionally, a STA that differentiates different access categories (ACs) applies the following backoff time before transmitting data, given it has data to transmit in $AC_0$: $AIFS[AC_0] + b[AC_0]$, wherein $AIFS[AC_0] = SIFSTime + AIFSN[AC_0] \times slotTime$, $b[AC_0] = c[AC_0] \times slotTime$, and $c$ is a random number drawn from a uniform distribution in the range $[0, CW[AC_0]]$. $CW[AC_0]$ equals $(CWmin[AC_0] + 1) \cdot 2^x - 1$ with the $x^{th}$ retransmission $(x = 0, ... , N_{max})$, but is no larger than $CWmax[AC_0]$. Thus, if there is no retransmission, i.e. $x = 0$, $CW$ equals $CWmin$. The backoff time $b$ counts down to zero. If it reaches zero, the STA exchanges data with another STA, often an AP, for a time no longer than TXOP limit. In case another transmission is detected, the countdown is paused until the channel is detected as idle again. After a busy period, the arbitration interframe spacing $(AIFS[AC_0])$ is present again before the countdown of $b[AC_0]$ continues.

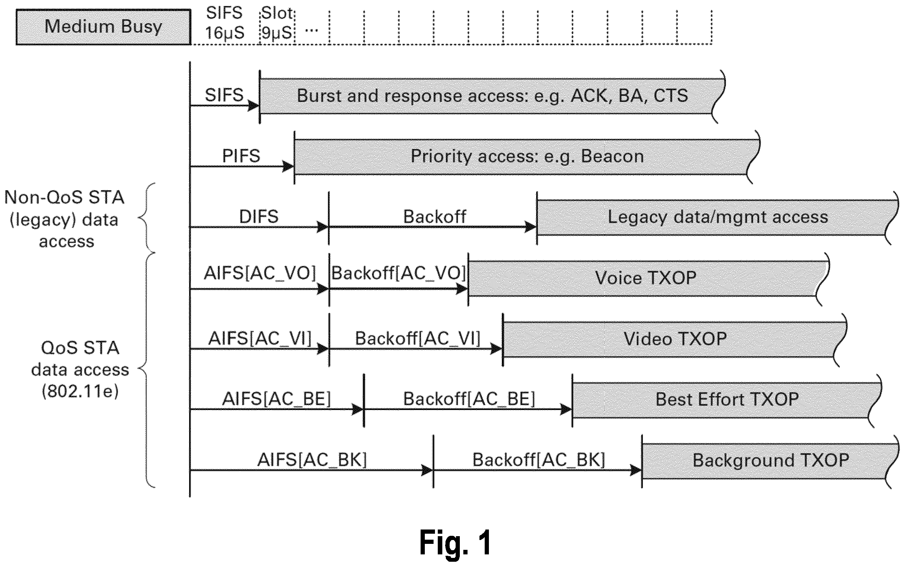

Fig. 1 shows a diagram illustrating an example of channel access timing depending on priorities. The backoff is a random number and the figure shows a snapshot in which the random numbers are similarly correlated than $CWmin[AC_0]$.

Further channel access parameters that are typically not imposed by regulatory authorities, but by a standard such as 802.11 WLAN in order to control data flow in difficult (e.g. dense) environments include:

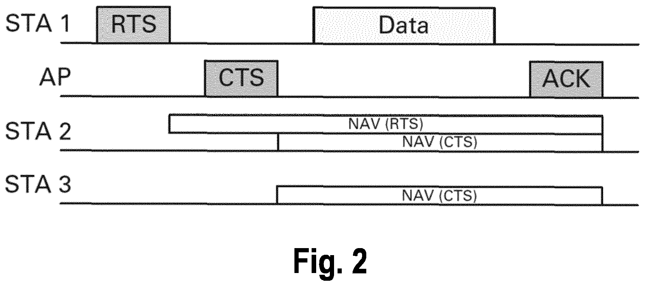

- Admission control yes/no: An AP may set admission control for one or more AC. This means that a STA needs to ask for transmit time grant, before it may transmit. Within a certain period, this granted transmit time must not be exceeded.
- RTS/CTS threshold value: An AP may request STAs to use RTS/CTS in order to protect channel access in case a TXOP is longer than a certain temporal threshold (between $32\mu s$ and 32ms). Alternatively, RTS/CTS may be disabled, or the decision is up to the transmitting STA. Fig. 2 shows a diagram of a typical RTS/CTS exchange to protect a TXOP: Whereas STA2 can receive the RTS of STA1, that contains the duration NAV of the data exchange, STA 3 cannot. Thus, STA3 is unaware of STA1's transmission, and it could potentially transmit causing a collision at the AP. However, STA3 can receive the CTS by the AP, that contains the duration NAV, too. Consequently, a collision is avoided. It shall be noted that the NAV duration point always to the end of the TXOP.
- TWT required yes/no: An AP may require scheduled contention-based access, e.g. it allows a set of STAs to content for channel access within a certain time span. This helps to limit the collision domain and/or STAs to save power by disabling their radio outside the assigned time span.
- TWT service period parameters
- Trigger based access only yes/no: An AP may request an STA not to initiate an unsolicited transmission, i.e., a STA may only transmit if requested by the AP via a trigger frame. This helps to multiplex the transmission by various STAs in uplink, i.e. from STA to AP.

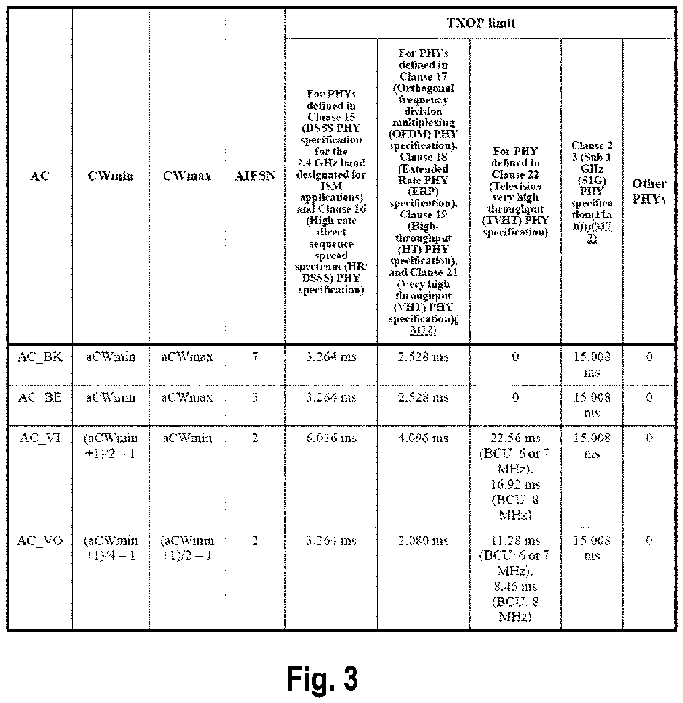

In the following reference is made to all these parameters, i.e., the parameters imposed by regulatory authorities and imposed by a standard, as channel access (CA) parameters. Fig. 3 shows an exemplary EDCA parameter set differentiating ACs and PHYs. For PHYs different EDCA parameters may apply when they operate under different regulatory domains.

The AP may define these parameters during association and/or continuously within a beacon. The AP broadcasts these parameters and any STA within the BSS of the AP is required to comply. In case a STA does not support an optional feature such as target wait time (TWT), it may dissent. STAs are mandated to update these parameters once they receive new parameters from the AP within e.g. a beacon frame. In case an AP does not broadcast CA parameters, every STA uses default parameters that typically correspond to ones defined by regulatory authorities or in Fig. 3.

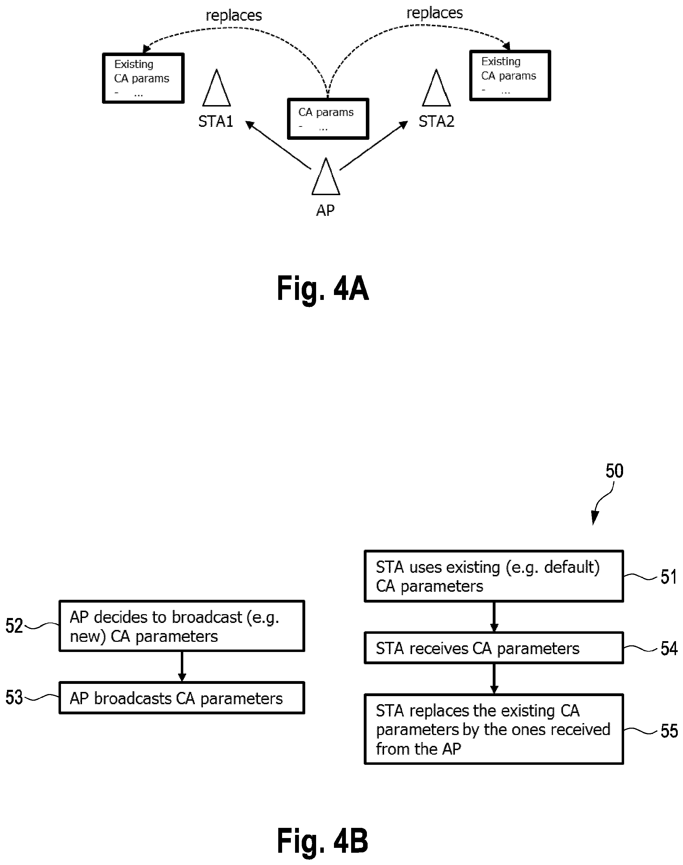

Fig. 4 shows diagrams illustrating a conventional CA parameter update operation. Fig. 4A shows a schematic diagram illustrating the mechanism and Fig. 4B shows a flow chart of a communication method 50 of the communication between the AP and the STA. Initially (step 51) the STA uses existing (e.g. default) CA parameters. Once the AP decides to broadcast (e.g. new) CA parameters (step 52) and actually broadcasts these parameters (step 53), the STA receives the broadcasted CA parameters (step 54) and replaces the existing CA parameters with the received CA parameters (step 55).

The same CA parameters for all STAs within a BSS may not be suitable for certain applications as will be detailed in the following.

Two types of STAs may have different traffic requirements. High throughput STAs benefit from a long TXOP, but CWmin is less important, whereas low latency STAs benefit from a short CWmin, but a short TXOP limit is often sufficient, because data packets are small. As the AP may only set all CA parameters within its BSS to the same value, at least one type of STAs, if not both, operate in unfavorable conditions.

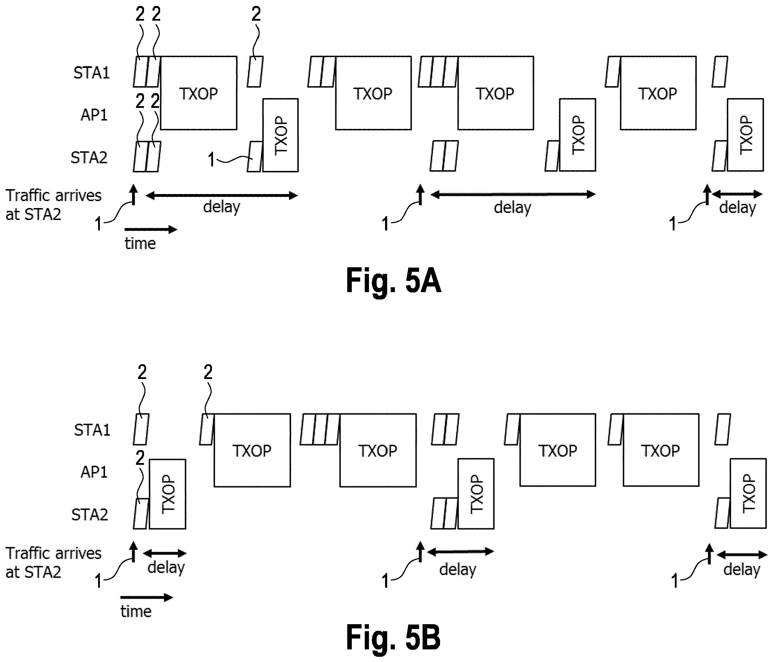

Fig. 5 shows diagrams illustrating an example of CWmin adjustment and its impact to latency. Two STAs, STA 1 and STA 2, exchange data with an AP. Both STAs use same AC. STA1 has high throughput traffic and always data to transmit whereas STA2 has occasionally low latency traffic. At STA 2, new data packets arrive at the given points in time (indicated by arrows 1). In the diagram shown in Fig. 5A, both STAs use same CWmin values (indicated by blocks 2), whereas in the diagram shown in Fig. 5B, STA2 uses a lower setting of CWmin. As can be seen the delivery delay when STA2 has a lower setting of CWmin is reduced compared to both STAs having same CWmin setting. At the same time the throughput of STA1 is unchanged but has higher latency. The number of backoff slots $c[AC_0]$ is a random process; hence, the latency advantage as shown in Fig. 5 may not always be present. However, when measured as a statistical average, STA 2 has a latency advantage.

STAs may operate at different locations within a BSS. Some STAs that are hidden to other STAs may cause frequent collisions of data units, e.g. physical protocol data units (PPDUs), originating from each other. RTS/CTS would help those STAs to avoid collisions. As the AP may only set RTS/CTS to be mandatory for all STAs, non-hidden STAs have a performance penalty because of the RTS/CTS overhead. Similarly, due to different locations, STAs may be differently affected by OBSS traffic, i.e., traffic outside of their BSS. Those STAs may also benefit from RTS/CTS operation and/or lower CW values for more aggressive channel access but as these parameters apply to all STAs within a BSS, STAs that do not suffer from OBSS traffic may have a performance penalty.

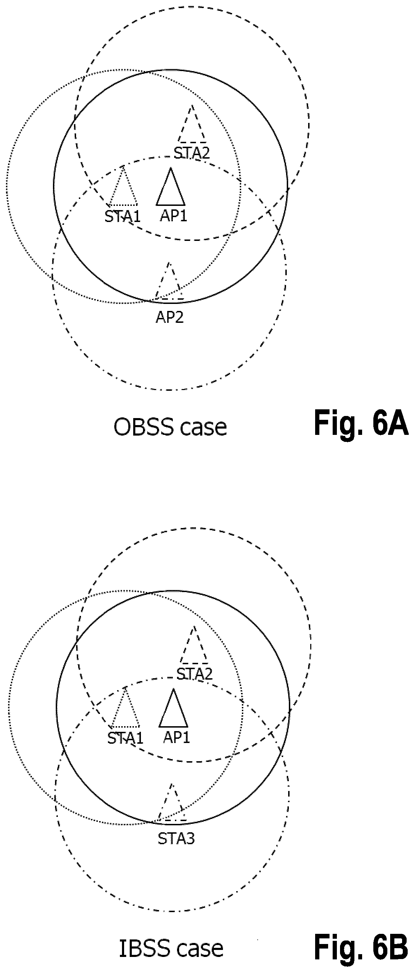

Fig. 6 shows diagrams illustrating the hidden node problem in OBSS and IBSS. Fig. 6A shows a diagram illustrating an example in which AP1 has STA1 and STA2 within its intra BSS (IBSS) and AP2 creates an overlapping BSS (OBSS). The circles around the respective components indicate their sensitivity region. Since AP1, STA1 and STA2 are within the coverage area of each other, RTS/CTS is not needed from IBSS perspective in most cases. RTS/CTS may be yet beneficial if there is a legacy STA within the BSS. However, STA2 is hidden to AP2. Thus, the use of RTS/CTS for STA2 when exchanging data with AP1 is beneficial as AP2 lies within the coverage area of AP1.

Fig. 6B shows a diagram illustrating the IBSS case, which can be readily obtained with AP2 being replaced by STA3 belonging to the BSS of AP1. The subset formed by AP1, STA1, STA3 are non-hidden, whereas STA2 is hidden to STA3. Thus, STA2 and STA3 should apply RTS/CTS for protection of their TXOPs because even though STA2 or STA3 do not hear the RTS from STA3 or STA2, respectively, the CTS from AP1 indicating the channel busy is received by both STAs. AP can figure out if a hidden node problem exists by evaluating the point in time when collisions occur: If collisions of PPDUs by STA2 and STA3 happen not at the beginning of a PPDU transmission, a hidden node issue is likely.

Some low latency features compromise throughput in favor of latency. Naturally, an AP could balance the throughput disadvantage by different TXOP limit setting, but as the CA parameters apply for all STA, i.e., also to those STAs that do not use the latency features, this option is not viable.

Some STAs may be willing to share a TXOP with other STAs. However, as the AP cannot provide longer TXOP to these STAs specifically, these STAs will have a disadvantage.

Generally, in all examples outlined above, STA specific setting of CA parameters other than a BSS-wide (i.e. global) setting may help to improve key performance indicators (KPI) such as throughput and/or latency. A machine learning algorithm may be envisioned in an embodiment that adjusts these parameters based on measurements of the KPIs of some or all STAs within the entire BSS.

Instead of having common CA parameters that are valid for all STAs within a BSS, according to the present disclosure individual CA parameters can be assigned to a particular STA. In embodiments those CA parameters may differentiate queues (ACs) or traffics by traffic identifiers (TID) and can be even conditional on these as will be explained below.

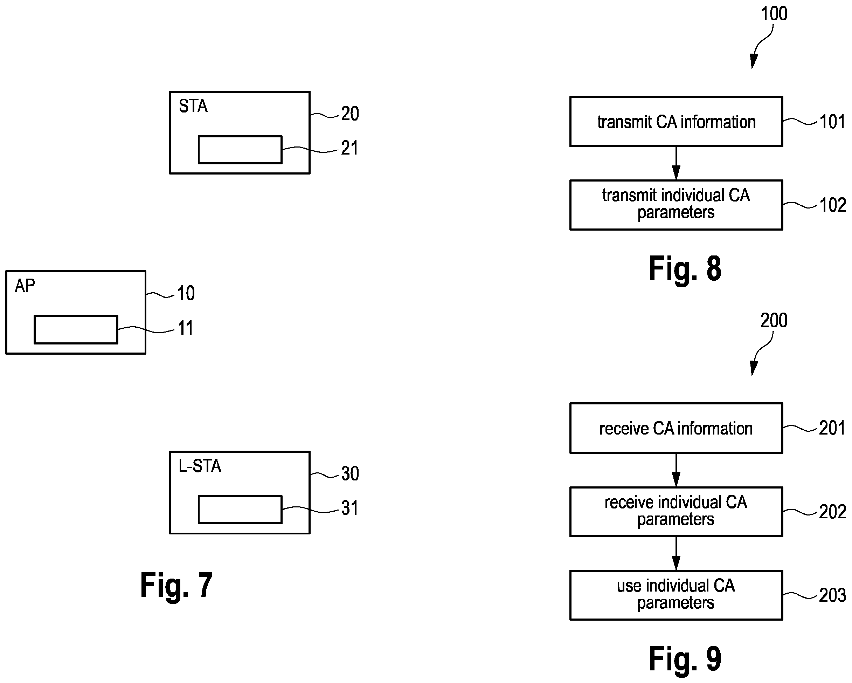

Fig. 7 shows a diagram illustrating a communication system including a first communication device 10 (herein also called access point AP) according to an aspect of the present disclosure for communicating with a second communication device 20 according to another aspect of the present disclosure (herein also called station STA, which supports individually updated CA parameters) and (optionally) a third communication device 30 (herein also called legacy station (L-STA), which does not generally support individually updated CA parameters). While only two stations 20, 30 are shown in Fig. 7, in a practical embodiment of the system there may be more (or fewer) stations; e.g., there may be no L-STA and multiple STAs, or there may be multiple L-STAs and multiple STAs. The first communication 10 is able to exchange (receive and/or transmit) data with the second communication device(s) 20 and the third communication device(s) 30.

Each of the communication devices 10, 20, 30 comprises circuitry 11, 21, 31 that is configured to perform particular operations. The circuitries may be implemented by a respective processor or computer, i.e., as hardware and/or software, or by dedicated units or components. For instance, respectively programmed processors may represent the respective circuitries 11, 21, 31.

Fig. 8 shows a flow chart of an embodiment of a first communication method 100 of the first communication device 10 according to the present disclosure, which may be performed by the circuitry 11. In a first step 101 the first communication device 10 transmits CA information indicating to one or more of the second communication devices 20 if and which of one or more CA parameters are individually set for said one or more second communication devices 20 and shall be used by said one or more second communication devices 20 instead of corresponding common CA parameters. In a second step 102 the first communication device 10 transmits one or more individually set CA parameters indicated by said CA information as individually set to said one or more second communication devices 20. It shall be noted that steps 101 and 102 need not necessarily be carried out subsequently, but may also be carried out together at same time, i.e., one transmission by device 10 may carry information explained above for the two steps 101 and 102.

Fig. 9 shows a flow chart of an embodiment of a second communication method 200 of the second communication device 20 according to the present disclosure, which may be performed by the circuitry 21. In a first step 201 the second communication device 20 receives channel access information indicating if and which of one or more channel access parameters are individually set and shall be used instead of corresponding common channel access parameters. In a second step 202 the second communication device 20 receives one or more individually set channel access parameters indicated by said channel access information as individually set. In a third step 203 the second communication device 20 uses said received one or more individually set channel access parameters instead of corresponding one or more common channel access parameters. It shall be noted that steps 201 and 202 need not necessarily be carried out subsequently, but may also be carried out together at same time, i.e., one reception by device 20 may receive information explained above for the two steps 201 and 202.

In an embodiment the basic operation may be as follows. The AP advertises the common CA parameters as part of a frame (e.g. beacon frame). These parameters are valid for every STA unless a particular CA parameter of a STA is labeled as "individually updated". The labeling may have happened before the common CA parameter update. As default, all parameters are not (labeled as) "individually updated" at STA side.

The AP may send individual CA parameters to one or more STAs in unicast or groupcast frames. Within such a frame, the individual CA parameters as well as an indication (herein also called "channel access information") is present that indicates if a STA shall update a particular CA parameter individually or commonly, in other words, it is or is not labeled as "individually updated" (exemplarily representing the "channel access information"). The indication may be parameter-wise; hence, a subset of the individual parameters may be labeled as "individually updated" whereas others are not. All parameters that are contained in an individual CA parameter update are considered at STA side to update the existing CA parameters. Parameters that are not addressed as part of the individual CA parameter update are unchanged with respect to the value and update indication.

The individual CA parameter update can be carried out as part of an "action no-Ack" frame or an "action" frame, i.e., it may or may not be acknowledged by a STA. It may be further envisioned that an individual parameter update is transmitted together with a common parameter update, e.g. within a beacon frame. Furthermore, it may be conveyed together with signaling that changes the CA behavior, e.g. as part of a TWT setup agreement or real-time application (RTA) session negotiation.

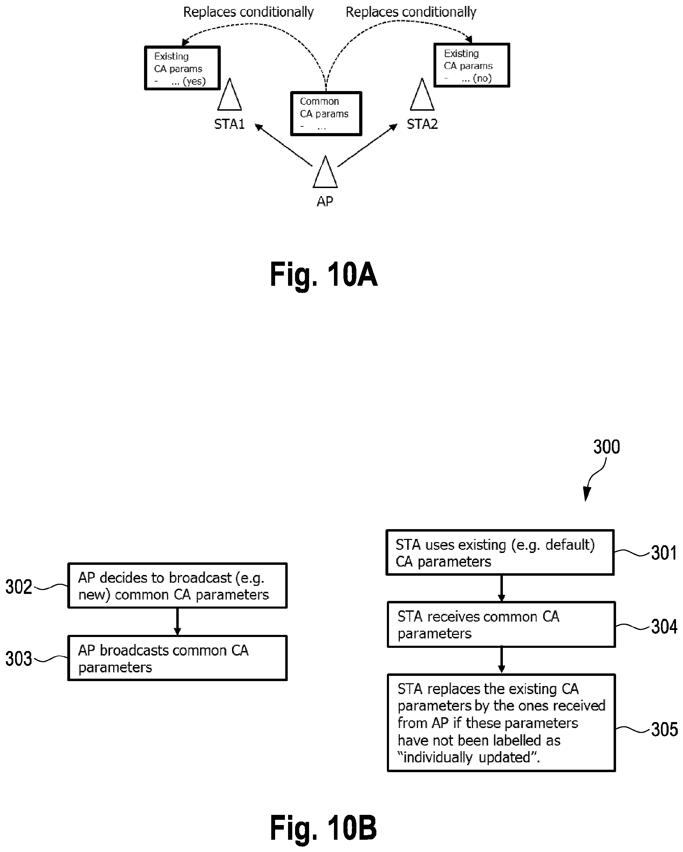

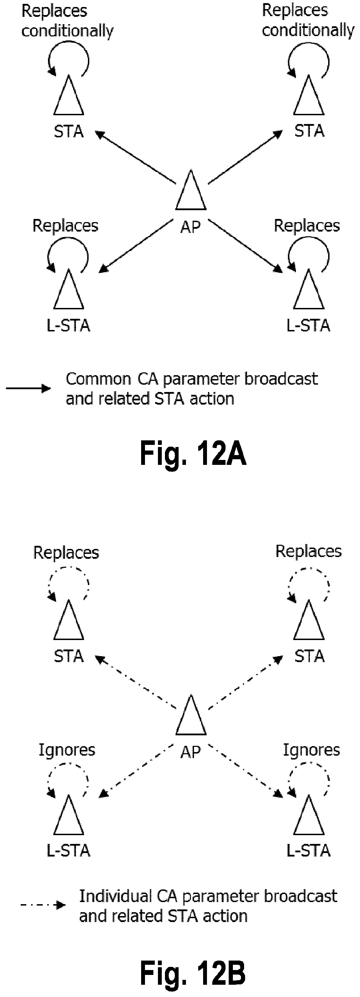

Fig. 10 shows diagrams illustrating the common CA parameter update operation according to an embodiment of the present disclosure. Fig. 10A illustrates the mechanism and Fig. 10B shows a flow chart of the communication method 300 of the communication between the AP and the STA. Initially (step 301) the STA uses existing (e.g. default) CA parameters. Once the AP decides to broadcast (e.g. new) CA parameters (step 302) and actually broadcasts these parameters (step 303), the STA receives the broadcasted common CA parameters (step 304) and replaces the existing CA parameters with the received CA parameters if these CA parameters are not labeled as "individually updated (step 305). The steps of the AP are thus substantially unchanged compared to the steps of the AP as shown in Fig. 4B. This is intentional to support the operation for legacy STAs that will be outlined below in Fig. 12 in more detail. As the behavior of the AP is unchanged for the common CA parameter update, legacy STAs can understand and act accordingly. The behavior shown in Fig. 10B refers to non-legacy STAs only, i.e., STAs that support individually updated CA parameters.

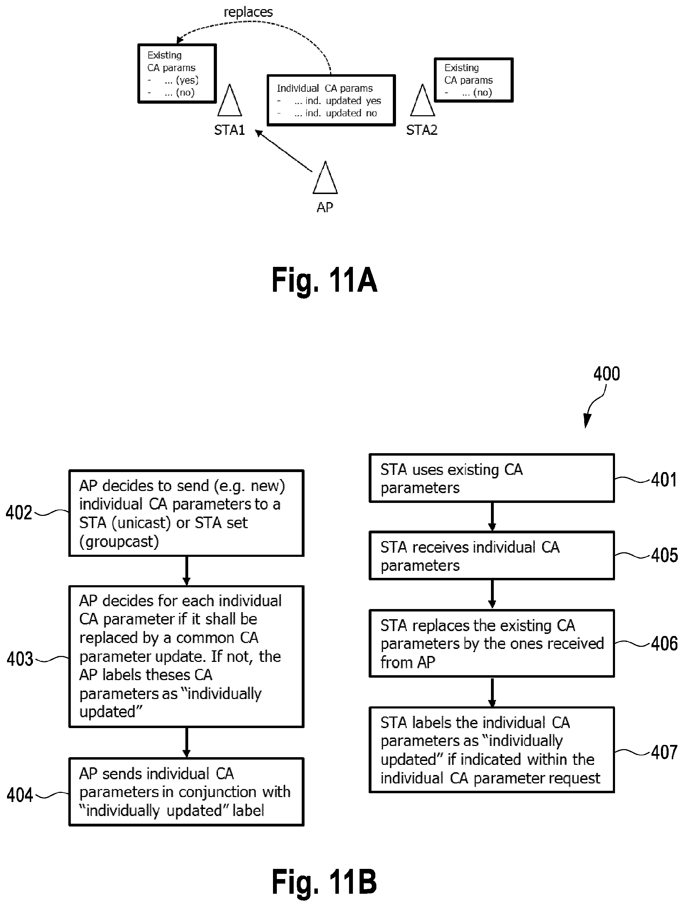

Fig. 11 shows the individual CA parameter update operation according to an embodiment of the present disclosure. Fig. 11A illustrates the mechanism and Fig. 11B shows a flow chart of the communication method 400 of the communication between the AP and the STA. Initially (step 401) the STA uses existing CA parameters. Once the AP decides to send (e.g. new) individual CA parameters to the STA via unicast or a set of STAs via groupcast (step 402), it decides for each individual CA parameter if it shall be replaced by a common CA parameter update. If an individual CA parameter shall not be replaced by a common CA parameter update, the AP labels these CA parameters as "individually updated" (step 403). Subsequently, the AP sends the individual CA parameters as well as the "individually updated" label (i.e., the CA parameter information) (step 404). The STA receives the individual CA parameters (and the CA parameter information) (step 405) and replaces the existing CA parameters by the received individual CA parameters (step 406). Further, the STA labels the individual CA parameters as "individually updated" if this is indicated within the individual parameter update (step 407), i.e. the STA extracts the information received from the AP and stores it. The received information may reside in a frame transmitted from the AP that holds the individual CA parameters.

Since legacy STAs are not aware of an individual CA parameter update, those STAs can only be controlled by the existing mechanism, i.e. the common CA parameters only. Thus, the AP should broadcast common CA parameters for all legacy STAs and achieve a different CA behavior by setting individual CA parameters to those STAs supporting individual CA parameter updates.

Fig. 12 shows diagrams illustrating the envisioned operation of CA parameter update for legacy STAs (L-STAs) and STAs that support individual CA parameters (STA). As shown in Fig. 12A the AP broadcasts the common CA parameters to all STAs. Legacy STAs (L-STAs) replace their current CA parameters with the ones signaled by the AP, whereas the STAs that support individual CA parameters replace their CA parameters conditionally (i.e., depending on the "individually updated" label). A conditional replacement includes to ignore a CA parameter set in extreme case. After this step, at least all L-STAs are supplied with common CA parameters.

According to Fig. 12B the AP broadcast the individual CA parameters to all STAs. While L-STAs ignore this packet because they are unaware of the packet type and are not able to react, STAs that support individual CA parameters replace their CA parameters with the ones received from the AP. After these steps, all non-L-STAs are supplied with individual CA parameters, whereas L-STA CA parameters are unchanged after this operation.

Thus, after executing both steps, L-STAs and non-L-STAs may have different CA parameters. Parameters are the same among L-STAs, but non-L-STAs may each have different CA parameters.

According to one embodiment to achieve different CA parameters among L-STAs an AP does not transmit common CA parameters via a broadcast packet (e.g. beacon frame, i.e., the beacon frame is still transmitted but may not include the CA parameter update information) but in unicast packets only. Such unicast packets comprise an association response or reassociation response. Thus, an AP informs every L-STA about CA parameters solely in a unicast packet which is only processed and evaluated by the STA which has the same MAC address as the one indicated in the packet as receiver MAC address. Once the AP sets a different CA parameter set for a L-STA, it stops transmitting common CA parameters via a broadcast packet. Otherwise the common CA parameters would overwrite the individual setting. As the only defined unicast packets for L-STAs may be only sent in a (re)association phase, during which a STA (re)associates to an AP, an AP may consider a disassociation before. Thereby the AP should consider that reassociation takes significant amount of time during which the L-STA cannot transmit; hence, latency and throughput requirements should be reflected in its decision and/or related sensitive traffic should be stopped.

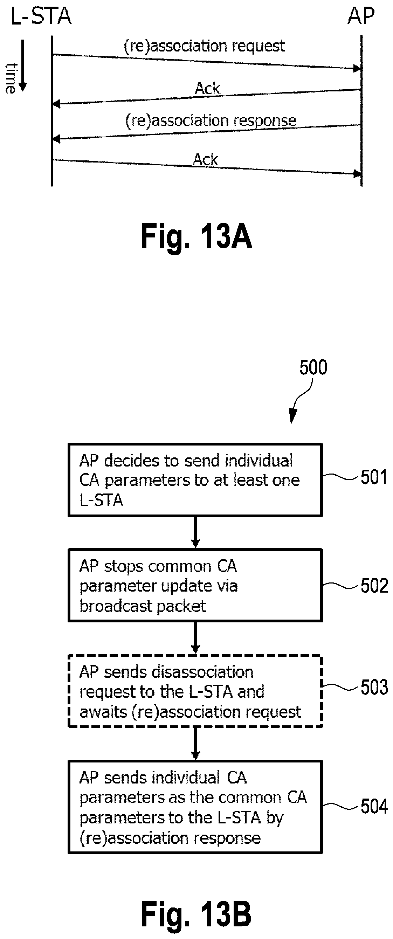

Since the AP omits any broadcast CA parameter update, a L-STA is going to keep these parameters until it receives a disassociation and/or a (re)association response. If the AP decides that each L-STA should adopt common CA parameters, it may continue the common CA parameter update via a broadcast (e.g. beacon) packet. Fig. 13 illustrates individual CA parameter allocation to L-STAs. Fig. 13A shows a diagram illustrating the (re)association frame exchange between a STA and an AP, whereas Fig. 13B shows the flowchart of the communication method 500 from AP perspective with the optional step in a dashed box. Initially (step 501), the AP decides to send individual CA parameters to at least one L-STA. Further, the AP stops the common CA parameter update via broadcasting (step 502). If the L-STA shall obtain individual CA parameters, the AP then sends a disassociation request to the L-STA and awaits a (re)association request from the L-STA (step 503). Finally (step 504), the AP sends individual CA parameters as common CA parameters to the L-STA by a (re)association response. Thus, on L-STA side, neither the (re)association procedure nor the adoption of CA parameters procedure changes: The L-STA considers the individual CA parameters received via (re)association response as the common CA parameters within its BSS.

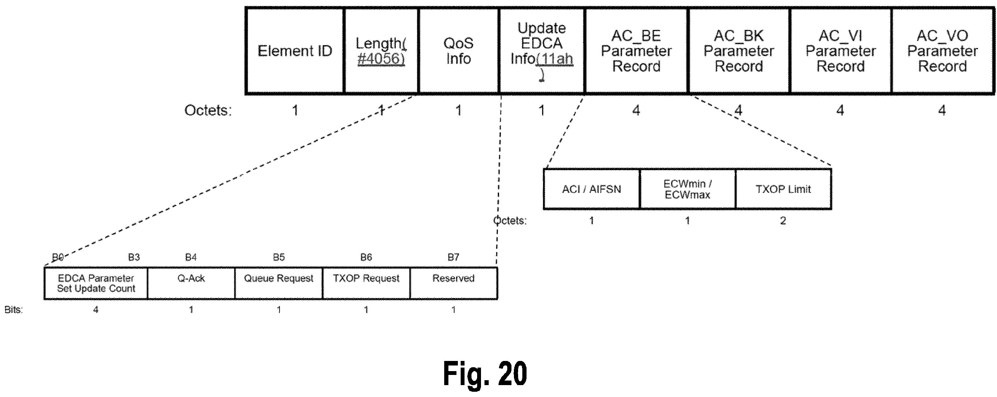

The frame that sets the common CA parameters in broadcast or unicast by the EDCA parameter set element may hold various fields as exemplarily shown in Fig. 20. Besides the actual CA parameter values, this element may also contain an update counter or EDCA parameter set update count. The update counter is increased once the signaled CA parameters change. This is to simplify implementation of a STA, because it needs only to update when there is a change in the update counter rather than every time an EDCA parameter element is received. This behavior can be exploited to continue beacon transmission although individual CA parameter are set according to the method described above (e.g. in the previous paragraph) in the following sense: The AP uses a higher or same value for the update counter within the (re) association response than in any broadcast CA parameter update. Thus, L-STAs may ignore the broadcast CA parameter update, because the signaled parameter set appears to be outdated in comparison to the one included in the reassociation response or as already adopted.

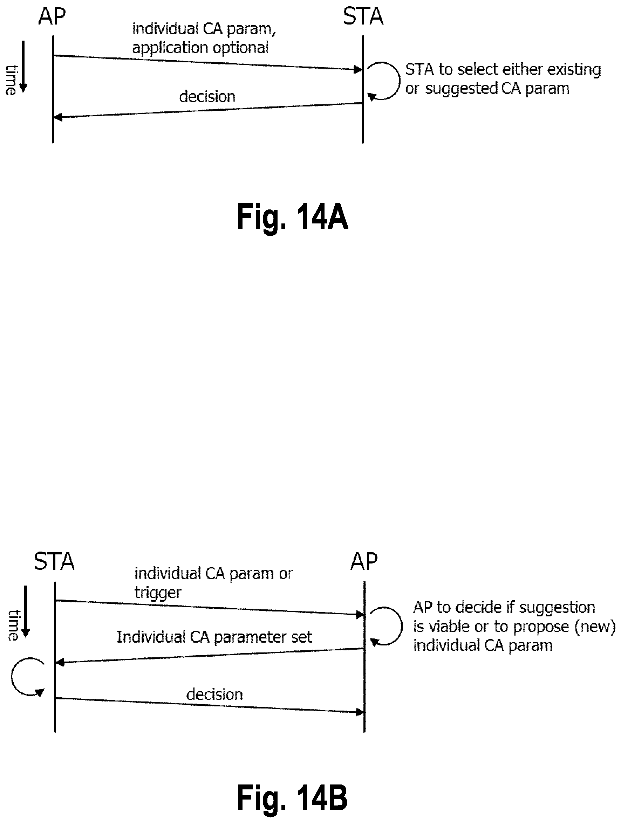

Fig. 14 shows diagrams illustrating the operation using a suggestion and request of (new) individual CA parameters according to an embodiment of the present disclosure. At any time, the AP may suggest alternative individual CA parameter sets for STAs. For that reason, the individual CA parameter set signaling may include an identifier for the AP to indicate if the signaled CA parameters are mandatory or optional for the STA to apply, i.e., to replace the existing parameter set. If the application is optional, a STA indicates its choice back to the AP such that the AP has an updated view about the CA parameters applied by each STA within its BSS. The envisioned operation is illustrated in Fig. 14A.

Similarly, a STA may suggest a new CA parameter setting to the AP or trigger the AP to suggest new CA parameter set as part of a negotiation process. For example, the STA proposes a new CA parameter set, the AP decides and proposes a related CA parameter set that it may accept. Subsequently, the STA has the choice of accepting the proposed CA parameter set or continue using the existing one, which it reports to AP if the AP indicated that a report is requested within the proposed CA parameter set signaling. If the AP did not indicate a report request, the STA does not respond or is free in its decision to respond. In case the AP is not able or willing to propose a new CA parameter set, it proposes the existing one. The envisioned operation is illustrated in Fig. 14B.

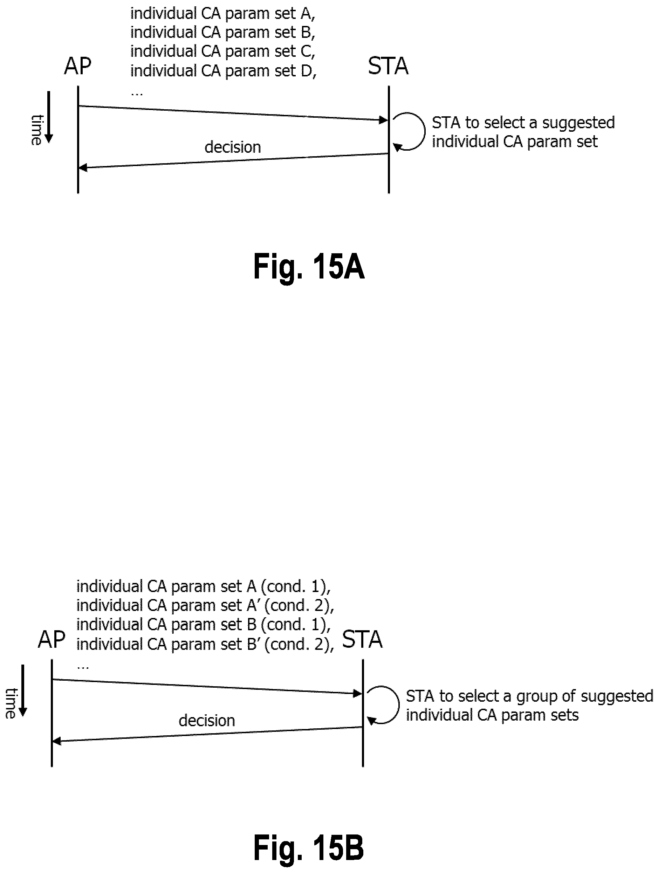

An AP may advertise multiple CA parameter sets that have different settings. A STA may select one set and optionally (in the sense mentioned above) indicate to the AP, which CA parameter set it is going to apply. The envisioned operation is illustrated in Fig. 15A. For example, one CA parameter set may consist of a low CWmin and low TXOP limit, whereas another CA parameter set reflects a high CWmin and high TXOP limit. The values may be chosen such that a fairness metric is fulfilled, as will be explained in more detail below. A STA shall always employ an entire CA parameter set and shall not select from different CA parameter sets.

Moreover, a CA parameter set may be conditional to supported features and/or operation modes and/or traffics. Thus, a first CA parameter set may be applicable for channel access outside of a TWT (= scheduled) period, whereas a second CA parameter set may be applicable for channel access inside a TWT period. Those two CA parameter sets are advertised as multiple CA parameter sets; hence, a STA selects more than one parameter set when they are tied together via a condition. The envisioned operation is illustrated in Fig. 15B. An example for an operation mode condition comprises different CA parameters for an initial transmission and a retransmission, respectively. In such cases an AP may control the use of e.g. RTS/CTS: For initial transmission, RTS/CTS is turned off or decision is left open to the STA, whereas for retransmission it is turned on. This helps to reduce RTS/CTS overhead when retransmissions happen only rarely while it ensures that the retransmission is protected by RTS/CTS; hence, the likelihood of multiple retransmissions is small.

Another example for an operation mode condition comprises different CA parameter sets depending on the remaining time span until a data unit should be delivered (e.g. MSDU lifetime). The shorter the remaining time span is, the more favorable CA parameter sets may get, e.g. lower CWmin and/or smaller TXOP limit. Furthermore, CA parameter sets may be conditioned on the traffic that a STA sends which is identified by a e.g. TID.

In order to guarantee fairness within a BSS although different CA parameters are applied by STAs within a BSS, i.e. are set individually, the AP may apply a fairness metric that considers the effect of different CA parameters. The application and definition of such a metric may be mandated by a standard or regulatory authority. The fairness metric is a mathematical description that balances the impact of each CA parameter. Generally, those CA parameters that provide an increase in a KPI, e.g. throughput or latency, with increasing value are considered inversely compared to those that provide an increase in a KPI with decreasing value.

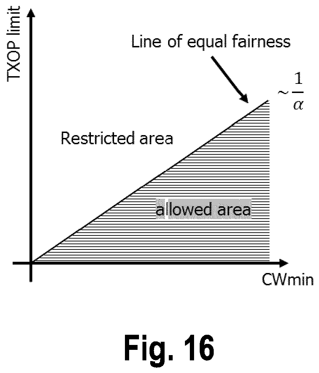

For explaining an example of the fairness metric, the assumption is made that TXOP limit and CWmin are the only CA parameters that may be set differently among STAs. As both CA parameters have an inverse impact to throughput, i.e., a small CWmin is beneficial as well as a high TXOP limit, an appropriate fairness metric that provides fair throughput, is

given by $CW_{min}/TXOP\ limit \geq \alpha = const$. The metric implies that a small CWmin can only be provided if TXOP limit is small or equivalently a large TXOP limit requires high CWmin. The impact of CWmin in relation to TXOP limit may be adjusted via the value of $\alpha$. Fig. 16 illustrates the dependency of CWmin and TXOP limit imposed by the fairness metric explained above. Within the allowed area, any combination of CWmin and TXOP limit may be chosen but fairness is not exploited unless the selected parameter set resides on the line of equal fairness (this corresponds to the equal sign in the equation above).

The AP may optionally share the computation of the fairness metric as well as the value of $\alpha$ as boundary conditions for CA parameters to be accept by the AP, i.e., it acts as an indicator of a negotiation margin. Preferably an AP shall not propose or provide CA parameters that are below CA parameters imposed by regulatory authority, i.e., lower than CWmin, higher than TXOP limit, or lower than AIFSN imposed by the regulatory authority. If the BSS operates isolated, e.g. in a non-public environment, this requirement may be relaxed.

The following additional new CA parameters (different from prior art) can be envisioned on top:

- AP to control the CW increase different from an exponential doubling with each retransmission. The current CW increase can be described as follows: $CW[AC_0] = (CWmin[AC_0] + 1) \cdot 2^x - 1$ with the $x^{th}$ retransmission ($x = 0, ..., N_{max}$) as described above. With this modification the AP may set and/or control the function $f(x) \neq 2^x$ for the increase of $CW[AC_0]$ in the following sense: $CW[AC_0] = (CWmin[AC_0] + 1) \cdot f(x) - 1$. The function $f(x)$ may be set by an AP and/or its parameters may be controlled, e.g. coefficients $c_i$ in exemplary $f(x) = c_0 x + c_1 x^2$ or $f(x) = c_0^{c_1 \cdot x}$ with $c_0 \neq 2$ and $c_0 \neq 1$.

- AP to control the level of channel access fragmentation by setting a threshold value that defines the least amount of data to be transmitted before a STA may start channel access attempt. This threshold reduces the number of channel access attempts because a STA waits and aggregates small data units before it starts transmitting the aggregated data units at once. While aggregation clearly increases latency, channel congestion is reduced which results in lower number of collisions and/or fast initial channel access in particular for STAs that have incoming traffic consisting of small data units.

Another embodiment of an AP is a multi-link device (MLD) that serves two or more links. A link may be created by a different carrier frequency, e.g. first link resides at 5 GHz whereas a second link resides at 6 GHz. Each link may have different characteristics such as traffic load. Thus, different CA parameter sets may be set for each link. Generally, as a legacy STA is a single link device, a differentiation of CA parameters over links may apply to common and individual CA parameters. For a STA to detect a preferred link without listening to all links that an AP serves, the AP may share the CA parameters of link A via link B and vice versa.

Fig. 17 shows a diagram that illustrates an AP MLD that serves STAs and/or non-AP MLDs over three links. Each link may have different CA parameter sets, regardless if CA parameters are common or individual.

The AP MLD may use different CA parameters over links to control link balance. In addition, individual CA parameters may be different for each link which enables the following application: An AP may set for most STAs on a certain link rather restrictive common CA parameters, e.g. short TXOP limit and/or large CWmin, in order to keep the channel free for STAs that have low latency traffic to serve. Those STAs (i.e., STAs that have low latency traffic to serve) would get rather relaxed individual CA parameters, e.g. small CWmin such that they can access a link quickly.

The fairness metric would be violated in this case. However, the fairness metric could be defined for all supported links jointly, i.e. the fairness metric needs to be fulfilled on average over all links. This would imply that STAs, that have restrictive CA parameters on link A, must have relaxed parameters on link B and vice versa. As an example with the assumptions above, a fairness metric could be given by:

$$\left(CW_{min} \middle/ TXOP\ limit\right)\Big|_{link\ A} \times \left(CW_{min} \middle/ TXOP\ limit\right)\Big|_{link\ B} \geq \alpha' \quad \text{for the multi-link case. Instead of multi-}$$

plying the fairness metric of each link within the joint metric, other mathematical operations may be envisioned too, e.g. addition.

This joint fairness may be considered for each STA separately since different STAs support different numbers of active links. Thus, a STA that supports only one link (e.g. a legacy STA) cannot profit from an average fairness over multiple links.

Fig. 19 illustrates how individual CA parameter sets may differentiate non-AP MLDs to prefer separate links and/or balance link load. If, for example, CWmin of parameter set P1,A is smaller than CWmin of P1,B, and with the fairness setting in place, link A is preferred over link B by non-AP MLD1, whereas it is vice versa for non-AP MLD2.

For the AP to determine individual CA parameters such that requirements of different STAs are fulfilled, an AP may collect statistical information (e.g. min, max and/or average) from STAs of the following parameters: number of collisions, time to wait for CA, TXOP length used, ratio of IBSS and OBSS transmit time, traffic constraints (e.g. throughput and latency requirements), channel state information, beamforming information, and traffic periodicity.

The process of measuring key parameters, adjusting CA parameters, and re-measuring key parameters to verify success of CA parameter adjustment takes time. Thus, it is preferable to reuse existing knowledge particularly in scenarios in which STAs are moving. The following operation can be envisioned to benefit from existing knowledge: The AP collects information that relates to position of the STAs in combination with the CA parameter sets applied. Based on this information, the AP may assign CA parameters to STAs when they are moving in a location within its BSS. Location related information can be the position information itself, beamforming information, CSI (channel state information), and radio environment information. Additional parameters other than location related information that needs to be considered by the AP is STA density and individual traffic requirements.

Generally, an iterative process of updating CA parameters in a static environment is preferable: First, the AP uses the same CA parameters for all STAs and may balance system-given throughput degradation (e.g. due to latency technologies). As a second step, KPIs are measured, and based on that individual CA parameters may be gradually changed and KPIs are measured again to see if an improvement is present. If no improvement is achieved, the AP may consider reverting the setting and/or set different CA parameters for other STA, too.

The present disclosure may provide one or more of the following options and technical effects: The AP can assign CA parameters individually to STAs; the AP MLD can apply different CA parameters for each link; the AP can propose different CA parameters to STA and the STA selects; the AP can propose CA parameters that are conditional to an operation mode and/or applied features; the AP or AP MLD can select CA parameters according to a fairness metric. The operation is compatible with legacy STAs. Additional CA parameters (in addition conventional CA parameters) may be used.

Thus, the foregoing discussion discloses and describes merely exemplary embodiments of the present disclosure. As will be understood by those skilled in the art, the present disclosure may be embodied in other specific forms without departing from the spirit or essential characteristics thereof. Accordingly, the disclosure of the present disclosure is intended to be illustrative, but not limiting of the scope of the disclosure, as well as other claims. The disclosure, including any readily discernible variants of the teachings herein, defines, in part, the scope of the foregoing claim terminology such that no inventive subject matter is dedicated to the public.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Further, such a software may also be distributed in other forms, such as via the Internet or other wired or wireless telecommunication systems.

The elements of the disclosed devices, apparatus and systems may be implemented by corresponding hardware and/or software elements, for instance appropriated circuits or circuitry. A circuit is a structural assemblage of electronic components including conventional circuit elements, integrated circuits including application specific integrated circuits, standard integrated circuits, application specific standard products, and field programmable gate arrays. Further, a circuit includes central processing units, graphics processing units, and microprocessors which are programmed or configured according to software code. A circuit does not include pure software, although a circuit includes the above-described hardware executing software. A circuit or circuitry may be implemented by a single device or unit or multiple devices or units, or chipset(s), or processor(s).

## Claims

1. First communication device (10) configured to operate as access point and to communicate with one or more second communication devices (20) that are configured to operate as stations, the first communication device comprising circuitry (11) configured to

   - transmit channel access information indicating to one or more of the second communication devices if and which of one or more channel access parameters are individually set for said one or more second communication devices and shall be used by said one or more second communication devices instead of corresponding common channel access parameters, and
   - transmit one or more individually set channel access parameters indicated by said channel access information as individually set to said one or more second communication devices,

   **characterized in that** the circuitry (11) is further configured to

   - set different parameter sets for different links between the first communication device and one or more second communication devices, each parameter set including one or more individually set channel access parameters, and
   - transmit said different parameter sets to the second communication devices using one or more of the links.

2. First communication device as claimed in claim 1,
   wherein the circuitry is configured to transmit said one or more individually set channel access parameters as unicast, groupcast or broadcast.

3. First communication device as claimed in claim 1 or 2,
   wherein the circuitry is configured to transmit as said one or more individually set channel access parameters one or more of

   - arbitration interframe space number (AIFSN),
   - minimum contention window (Cwmin),
   - maximum contention window (Cwmax),
   - transmit opportunity (TXOP) limit,
   - admission control setting,
   - ready to send (RTS) - clear to send (CTS) threshold value,
   - target wait time (TWT) requirement,
   - TWT service period parameters,
   - trigger based access setting,
   - contention window increase per retransmission, and

- minimum amount of data to be transmitted before a channel access attempt may be started.

4. First communication device as claimed in any preceding claim, wherein the circuitry is configured to transmit said channel access information and said one or more individually set channel access parameters together or separately within one of an action frame, a beacon frame, a signaling message, a target wait time (TWT) agreement or a real-time application (RTA) session negotiation.

5. First communication device as claimed in any preceding claim, wherein the circuitry is configured to

- transmit a disassociation request to a third communication device that is configured to communicate with the first communication device,
- receive a reassociation request from said third communication device, and
- transmit a reassociation response to said third communication device, said reassociation response including, as common access parameters, one or more individually set channel access parameters that are individually set for said third communication device.

6. First communication device as claimed in claim 5, wherein the circuitry is configured to stop transmitting common channel access parameters as broadcast before transmitting the disassociation request or before transmitting the reassociation response to said third communication device and to resume transmitting common channel access parameters as broadcast once the first communication device desires common channel access parameters to be applied by said third communication device and optionally one or more further third communication devices, and/or to indicate within the common access parameters transmitted as broadcast an update counter indication that is smaller or equal than the update counter indication used in the association or reassociation response to said third communication device and optionally one or more further third communication devices.

7. First communication device as claimed in any preceding claim, wherein the circuitry is configured to

- stop transmitting common channel access parameters as broadcast,
- receive an association request by a third communication device, and
- transmit an association response which contains at least one channel access parameter that is different from the common access parameters as a response to the association request by the third communication device.

8. First communication device as claimed in any preceding claim, wherein the circuitry is configured to transmit one or more proposed parameter sets to a second communication device, each parameter set including one or more individually set channel access parameters, wherein the one or more proposed parameter sets are transmitted by the first communication device either on its own decision or upon request by said second communication device or upon receipt of a proposed parameter set from said second communication device.

9. First communication device as claimed in any preceding claim, wherein the circuitry is configured to

- transmit multiple groups of proposed parameter sets to a second communication device, each parameter set including one or more individually set channel access parameters and each group comprising two or more parameter sets for use under different conditions, in particular including one or more of different times of use, different types of transmission, different operation modes, remaining time until delivery of a data unit, amount of data to be transmitted, type of data to be transmitted, and priority of data to be transmitted.

10. First communication device as claimed in any preceding claim, wherein the circuitry is configured to set one or more individual channel access parameters under consideration of a fairness metric, wherein the fairness metric balances the effect of one or more channel access parameters on one or more key performance indicators.

11. First communication device as claimed in any preceding claim, wherein the circuitry is configured to set the different parameter sets for different links between the first communication device and a particular second communication device under consideration of a fairness metric so that a fairness criterion is fulfilled in average over said different links, wherein the fairness metric balances the effect of one or more channel access parameters on one or more key performance indicators.

12. Second communication device (20) configured to operate as station and to communicate with a first communication device (10) that is configured to operate as access point, the second communication device comprising circuitry (21) configured to

- receive channel access information indicating if and which of one or more channel access parameters are individually set and shall be used instead of corresponding common channel access parameters,
- receive one or more individually set channel access parameters indicated by said channel access information as individually set, and
- use said received one or more individually set channel access parameters instead of corresponding one or more common channel access parameters.

**characterized in that** the circuitry (21) is further configured to

- receive different parameter sets from the first communication device using one or more of different links between the first communication device and the second communication device, each parameter set including one or more individually set channel access parameters.

13. First communication method of a first communication device (10) configured to operate as access point and to communicate with one or more second communication devices (20) that is configured to operate as station, the first communication method comprising

- transmitting channel access information indicating to one or more of the second communication devices if and which of one or more channel access parameters are individually set for said one or more second communication devices and shall be used by said one or more second communication devices instead of corresponding common channel access parameters, and
- transmitting one or more individually set channel access parameters indicated by said channel access information as individually set to said one or more second communication devices,

**characterized in that** the first communication method further comprises

- setting different parameter sets for different links between the first communication device and one or more second communication devices, each parameter set including one or more individually set channel access parameters, and
- transmitting said different parameter sets to the second communication devices using one or more of the links.

14. Second communication method of a second communication device (20) configured to operate as station and to communicate with a first communication device (10) that is configured to operate as access point, the second communication method comprising

- receiving channel access information indicating if and which of one or more channel access parameters are individually set and shall be used instead of corresponding common channel access parameters,
- receiving one or more individually set channel access parameters indicated by said channel access information as individually set, and
- using said received one or more individually set channel access parameters instead of corresponding one or more common channel access parameters,

**characterized in that** the second communication method further comprises

- receiving different parameter sets from the first communication device using one or more of different links between the first communication device and the second communication device, each parameter set including one or more individually set channel access parameters.

15. A computer program comprising program code means for causing a computer to perform the steps of said method according to claim 13 when said computer program is carried out on an access point or to perform the steps of said method according to claim 14 when said computer program is carried out on a station.

**Patentansprüche**

1. Erste Kommunikationsvorrichtung (10), die konfiguriert ist, um als Zugangspunkt betrieben zu werden und mit einem oder mehreren dritten Kommunikationsvorrichtungen (20) zu kommunizieren, die konfiguriert sind, um als Stationen betrieben zu werden, die erste Kommunikationsvorrichtung umfassend eine Schaltung (11), die konfiguriert ist zum

   - Übertragen von Kanalzugriffsinformationen, die einer oder mehreren der zweiten Kommunikationsvorrichtungen anzeigen, ob und welche von einem oder mehreren Kanalzugriffsparametern individuell für die eine oder die mehreren zweiten Kommunikationsvorrichtungen eingestellt sind und von der einen oder den mehreren zweiten Kommunikationsvorrichtungen anstelle von entsprechenden gemeinsamen Kanalzugriffsparametern verwendet werden sollen, und
   - Übertragen eines oder mehrerer individuell eingestellter Kanalzugriffsparameter, die durch die Kanalzugriffsinformationen als individuell eingestellt angezeigt werden, an die eine oder mehreren zweiten Kommunikationsvorrichtungen,

   **dadurch gekennzeichnet, dass** die Schaltung (11) ferner konfiguriert ist zum

   - Einstellen unterschiedlicher Parametersätze für unterschiedliche Verbindungen zwischen der ersten Kommunikationsvorrichtung und einer oder mehreren zweiten Kommunikationsvorrichtungen, wobei jeder Parametersatz einen oder mehrere individuell eingestellte Kanalzugriffsparameter einschließt, und
   - Übertragen der unterschiedlichen Parametersätze an die zweiten Kommunikationsvorrichtungen unter Verwendung einer oder mehrerer der Verbindungen.

2. Erste Kommunikationsvorrichtung nach Anspruch 1,
   wobei die Schaltung konfiguriert ist, um den einen oder die mehreren individuell eingestellten Kanalzugriffsparameter als Unicast, Groupcast oder Broadcast zu übertragen.

3. Erste Kommunikationsvorrichtung nach Anspruch 1 oder 2,
   wobei die Schaltung konfiguriert ist, um als den einen oder die mehreren individuell eingestellten Kanalzugriffsparameter eines oder mehrere zu übertragen von

   - Arbitration-Interframe-Space-Nummer (AIFSN),
   - minimalen Konkurrenzfenster (Cwmin),
   - maximalen Konkurrenzfenster (Cwmax),
   - Grenze der Sendegelegenheit (TXOP),
   - Zulassungssteuerungseinstellung,
   - sendebereit (RTS)
   - Clear-to-Send (CTS)-Grenzwert,
   - Anforderung an die Zielwartezeit (TWT),
   - TWT-Service-Perioden-Parameter,
   - auslöserbasierter Zugriffseinstellung,
   - Erhöhung des Konkurrenzfensters pro Neuübertragung, und
   - Mindestdatenmenge, die zu übertragen ist, bevor ein Kanalzugriffsversuch gestartet werden darf.

4. Erste Kommunikationsvorrichtung nach einem der vorstehenden Ansprüche,
   wobei die Schaltung konfiguriert ist, um die Kanalzugriffsinformationen und den einen oder die mehreren individuell eingestellten Kanalzugriffsparameter zusammen oder getrennt innerhalb eines Aktionsrahmens, eines Beacon-Rahmens, einer Signalisierungsnachricht, einer Zielwartezeit-Vereinbarung (TWT-Vereinbarung) oder einer Echtzeitanwendungs-Sitzungsaushandlung (RTA-Sitzungsaushandlung) zu übertragen.

5. Erste Kommunikationsvorrichtung nach einem der vorstehenden Ansprüche,
   wobei die Schaltung konfiguriert ist zum

   - Übertragen einer Dissoziationsanforderung an eine dritte Kommunikationsvorrichtung, die konfiguriert ist, um mit der ersten Kommunikationsvorrichtung zu kommunizieren,

- Empfangen einer Reassoziierungsanforderung von der dritten Kommunikationsvorrichtung, und
- Übertragen einer Reassoziierungsantwort an die dritte Kommunikationsvorrichtung, wobei die Reassoziierungsantwort als gemeinsame Zugriffsparameter einen oder mehrere individuell eingestellte Kanalzugriffsparameter einschließt, die individuell für die dritte Kommunikationsvorrichtung eingestellt sind.

6. Erste Kommunikationsvorrichtung nach Anspruch 5,
wobei die Schaltung konfiguriert ist, um das Übertragen gemeinsamer Kanalzugriffsparameter als Broadcast vor dem Übertragen der Disassoziierungsanforderung oder vor dem Übertragen der Reassoziierungsantwort an die dritte Kommunikationsvorrichtung zu beenden und das Übertragen gemeinsamer Kanalzugriffsparameter als Broadcast wiederaufzunehmen, sobald die erste Kommunikationsvorrichtung wünscht, dass gemeinsame Kanalzugriffsparameter von der dritten Kommunikationsvorrichtung und optional einer oder mehreren weiteren dritten Kommunikationsvorrichtungen angewendet werden, und/oder innerhalb der als Broadcast übertragenen gemeinsamen Zugriffsparameter eine Aktualisierungszählerangabe anzuzeigen, die kleiner oder gleich der Aktualisierungszählerangabe ist, die in der Assoziierungs- oder Reassoziierungsantwort an die dritte Kommunikationsvorrichtung und optional eine oder mehrere weitere dritte Kommunikationsvorrichtungen verwendet wird.

7. Erste Kommunikationsvorrichtung nach einem der vorstehenden Ansprüche,
wobei die Schaltung konfiguriert ist zum

- Einstellen des Übertragens von Zugriffsparametern für den gemeinsamen Kanal als Broadcast,
- Empfangen einer Assoziierungsanforderung durch eine dritte Kommunikationsvorrichtung, und
- Übertragen einer Assoziierungsantwort, die mindestens einen Kanalzugriffsparameter enthält, der sich von den gemeinsamen Zugriffsparametern unterscheidet, als Antwort auf die Assoziierungsanforderung durch die dritte Kommunikationsvorrichtung.

8. Erste Kommunikationsvorrichtung nach einem der vorstehenden Ansprüche,
wobei die Schaltung konfiguriert ist, um einen oder mehrere vorgeschlagene Parametersätze an eine zweite Kommunikationsvorrichtung zu übertragen, wobei jeder Parametersatz einen oder mehrere individuell eingestellte Kanalzugriffsparameter einschließt, wobei der eine oder die mehreren vorgeschlagenen Parametersätze durch die erste Kommunikationsvorrichtung entweder nach eigener Entscheidung oder auf Anforderung durch die zweite Kommunikationsvorrichtung oder bei Empfang eines vorgeschlagenen Parametersatzes von der zweiten Kommunikationsvorrichtung übertragen werden.

9. Erste Kommunikationsvorrichtung nach einem der vorstehenden Ansprüche,
wobei die Schaltung konfiguriert ist zum

- Übertragen mehrerer Gruppen von vorgeschlagenen Parametersätzen an eine zweite Kommunikationsvorrichtung, wobei jeder Parametersatz einen oder mehrere individuell eingestellte Kanalzugriffsparameter einschließt und jede Gruppe zwei oder mehr Parametersätze zur Verwendung unter verschiedenen Bedingungen umfasst, insbesondere einschließlich einer oder mehrerer von verschiedenen Nutzungszeiten, verschiedenen Übertragungsarten, verschiedenen Betriebsmodi, verbleibender Zeit bis zur Auslieferung einer Dateneinheit, Menge an zu übertragenden Daten, Art von zu übertragenden Daten und Priorität von zu übertragenden Daten.

10. Erste Kommunikationsvorrichtung nach einem der vorstehenden Ansprüche,
wobei die Schaltung konfiguriert ist, um einen oder mehrere individuelle Kanalzugriffsparameter unter Berücksichtigung einer Fairness-Metrik einzustellen, wobei die Fairness-Metrik die Auswirkung eines oder mehrerer Kanalzugriffsparameter auf eine oder mehrere Leistungskennzahlen ausgleicht.

11. Erste Kommunikationsvorrichtung nach einem der vorstehenden Ansprüche,
wobei die Schaltung konfiguriert ist, um die unterschiedlichen Parametersätze für unterschiedliche Verbindungen zwischen der ersten Kommunikationsvorrichtung und einer bestimmten zweiten Kommunikationsvorrichtung unter Berücksichtigung einer Fairness-Metrik einzustellen, sodass ein Fairness-Kriterium im Durchschnitt über die unterschiedlichen Verbindungen erfüllt wird, wobei die Fairness-Metrik die Auswirkung eines oder mehrerer Kanalzugriffsparameter auf eine oder mehrere Leistungskennzahlen ausgleicht.

12. Zweite Kommunikationsvorrichtung (20), die konfiguriert ist, um als Station betrieben zu werden und mit einem oder mehreren dritten Kommunikationsvorrichtungen (10) zu kommunizieren, die konfiguriert sind, um als Zugangspunkt betrieben zu werden, die erste Kommunikationsvorrichtung umfassend eine Schaltung (21), die konfiguriert ist zum

- Empfangen von Kanalzugriffsinformationen, die angeben, ob und welche von einem oder mehreren Kanalzugriffsparametern individuell eingestellt sind und anstelle von entsprechenden gemeinsamen Kanalzugriffsparametern verwendet werden sollen,

- Empfangen von einem oder mehreren individuell eingestellten Kanalzugriffsparameter, die durch die Kanalzugriffsinformationen als individuell eingestellt angezeigt werden, und

- Verwenden des empfangenen einen oder mehreren individuell eingestellten Kanalzugriffsparameter anstelle von entsprechenden ein oder mehreren gemeinsamen Kanalzugriffsparametern,

**dadurch gekennzeichnet, dass** die Schaltung (21) konfiguriert ist zum

- Empfangen unterschiedlicher Parametersätze von der ersten Kommunikationsvorrichtung unter Verwendung einer oder mehrerer unterschiedlicher Verbindungen zwischen der ersten Kommunikationsvorrichtung und der zweiten Kommunikationsvorrichtung, wobei jeder Parametersatz einen oder mehrere individuell eingestellte Kanalzugriffsparameter einschließt.

13. Erstes Kommunikationsverfahren einer ersten Kommunikationsvorrichtung (10), die konfiguriert ist, um als Zugangspunkt zu arbeiten und mit einer oder mehreren zweiten Kommunikationsvorrichtungen (20) zu kommunizieren, die konfiguriert sind, um als Station zu arbeiten, das erste Kommunikationsverfahren umfassend

- Übertragen von Kanalzugriffsinformationen, die einer oder mehreren der zweiten Kommunikationsvorrichtungen angeben, ob und welche eines oder mehrerer Kanalzugriffsparameter für die eine oder mehreren zweiten Kommunikationsvorrichtungen individuell eingestellt sind und von der einen oder den mehreren zweiten Kommunikationsvorrichtungen anstelle von entsprechenden gemeinsamen Kanalzugriffsparametern verwendet werden sollen, und

- Übertragen eines oder mehrerer individuell eingestellter Kanalzugriffsparameter, die durch die Kanalzugriffsinformationen als individuell eingestellt angezeigt werden, an die eine oder mehreren zweiten Kommunikationsvorrichtungen,

**dadurch gekennzeichnet, dass** das ersete Kommunikationsverfahren ferner umfasst:

- Einstellen unterschiedlicher Parametersätze für unterschiedliche Verbindungen zwischen der ersten Kommunikationsvorrichtung und einer oder mehreren zweiten Kommunikationsvorrichtungen, wobei jeder Parametersatz einen oder mehrere individuell eingestellte Kanalzugriffsparameter einschließt, und

- Übertragen der unterschiedlichen Parametersätze an die zweiten Kommunikationsvorrichtungen unter Verwendung einer oder mehrerer der Verbindungen.

14. Zweites Kommunikationsverfahren einer zweiten Kommunikationsvorrichtung (20), die konfiguriert ist, um als Station zu arbeiten und mit einer ersten Kommunikationsvorrichtung (10) zu kommunizieren, die konfiguriert ist, um als Zugangspunkt zu arbeiten, das zweite Kommunikationsverfahren umfassend:

- Empfangen von Kanalzugriffsinformationen, die angeben, ob und welche eines oder mehrerer Kanalzugriffsparameter individuell eingestellt sind und anstelle entsprechender gemeinsamer Kanalzugriffsparameter verwendet werden sollen,

- Empfangen eines oder mehrerer individuell eingestellter Kanalzugriffsparameter, die durch die genannte Kanalzugriffsinformationen als individuell eingestellt angegeben werden, und

- Verwenden der empfangenen einen oder mehreren individuell eingestellten Kanalzugriffsparameter anstelle von entsprechenden einen oder mehreren gemeinsamen Kanalzugriffsparametern,

**dadurch gekennzeichnet, dass** das zweite Kommunikationsverfahren ferner umfasst:

- Empfangen unterschiedlicher Parametersätze von der ersten Kommunikationsvorrichtung unter Verwendung einer oder mehrerer unterschiedlicher Verbindungen zwischen der ersten Kommunikationsvorrichtung und der zweiten Kommunikationsvorrichtung, wobei jeder Parametersatz einen oder mehrere individuell eingestellte Kanalzugriffsparameter einschließt.

15. Computerprogramm, umfassend Programmcodemittel, um einen Computer zu veranlassen, die Schritte des Verfahrens nach Anspruch 13 durchzuführen, wenn das Computerprogramm auf einem Zugangspunkt ausgeführt wird, oder die Schritte des Verfahrens nach Anspruch 14 durchzuführen, wenn das Computerprogramm auf einer Station ausgeführt wird.

**Revendications**

1. Premier dispositif de communication (10) configuré pour fonctionner en tant que point d'accès et pour communiquer avec un ou plusieurs deuxièmes dispositifs de communication (20) qui sont configurés pour fonctionner en tant que stations, le premier dispositif de communication comprenant un système de circuits (11) configuré pour

   - transmettre des informations d'accès au canal indiquant à un ou plusieurs des deuxièmes dispositifs de communication si et lesquels parmi un ou plusieurs paramètres d'accès au canal sont définis individuellement pour lesdits un ou plusieurs deuxièmes dispositifs de communication et doivent être utilisés par lesdits un ou plusieurs deuxièmes dispositifs de communication au lieu de paramètres d'accès au canal communs correspondants, et
   - transmettre un ou plusieurs paramètres d'accès au canal définis individuellement indiqués par lesdites informations d'accès au canal comme définis individuellement auxdits un ou plusieurs deuxièmes dispositifs de communication,

   **caractérisé en ce que** le système de circuits (11) est en outre configuré pour

   - définir différents ensembles de paramètres pour différentes liaisons entre le premier dispositif de communication et un ou plusieurs deuxièmes dispositifs de communication, chaque ensemble de paramètres comportant un ou plusieurs paramètres d'accès au canal définis individuellement, et
   - transmettre lesdits différents ensembles de paramètres aux deuxièmes dispositifs de communication à l'aide d'une ou plusieurs des liaisons.

2. Premier dispositif de communication selon la revendication 1,
   dans lequel le système de circuits est configuré pour transmettre lesdits un ou plusieurs paramètres d'accès au canal définis individuellement en tant que monodiffusion, diffusion de groupe ou diffusion.

3. Premier dispositif de communication selon la revendication 1 ou 2,
   dans lequel le système de circuits est configuré pour transmettre, en tant que lesdits un ou plusieurs paramètres d'accès au canal définis individuellement, un ou plusieurs parmi

   - numéro d'espace intertrame d'arbitrage (AIFSN),
   - fenêtre de contention minimale (Cwmin),
   - fenêtre de contention maximale (Cwmax),
   - limite d'opportunité de transmission (TXOP),
   - définition de commande d'admission,
   - prêt à envoyer (RTS)
   - valeur seuil de prêt à émettre (CTS),
   - exigence en matière de temps d'attente cible (TWT),
   - paramètres de période de service TWT,
   - définition d'accès basé sur déclencheur,
   - augmentation de fenêtre de contention par retransmission, et
   - quantité minimale de données à transmettre avant qu'une tentative d'accès au canal puisse être démarrée.

4. Premier dispositif de communication selon l'une quelconque revendication précédente,
   dans lequel le système de circuits est configuré pour transmettre lesdites informations d'accès au canal et lesdits un ou plusieurs paramètres d'accès au canal définis individuellement ensemble ou séparément au sein de l'un parmi une trame d'action, une trame de balise, un message de signalisation, un accord de temps d'attente cible (TWT) ou une négociation de session d'application en temps réel (RTA).

5. Premier dispositif de communication selon l'une quelconque revendication précédente,
   dans lequel le système de circuits est configuré pour

   - transmettre une demande de dissociation à un troisième dispositif de communication qui est configuré pour communiquer avec le premier dispositif de communication,

- recevoir une demande de réassociation de la part dudit troisième dispositif de communication, et
- transmettre une réponse de réassociation audit troisième dispositif de communication, ladite réponse de réassociation comportant, en tant que paramètres d'accès communs, un ou plusieurs paramètres d'accès au canal définis individuellement qui sont définis individuellement pour ledit troisième dispositif de communication.

**6.** Premier dispositif de communication selon la revendication 5,
dans lequel le système de circuits est configuré pour arrêter la transmission des paramètres d'accès au canal commun tels que diffusés avant de transmettre la demande de dissociation ou avant de transmettre la réponse de réassociation audit troisième dispositif de communication, et pour reprendre la transmission de paramètres d'accès au canal communs tels que diffusés une fois que le premier dispositif de communication souhaite que des paramètres d'accès au canal communs soient appliqués par ledit troisième dispositif de communication et facultativement un ou plusieurs autres troisièmes dispositifs de communication, et/ou pour indiquer, au sein des paramètres d'accès communs transmis tels que diffusés, une indication de compteur de mises à jour qui est inférieure ou égale à l'indication de compteur de mises à jour utilisé dans l'association ou la réponse de réassociation audit troisième dispositif de communication et facultativement un ou plusieurs autres troisièmes dispositifs de communication.

**7.** Premier dispositif de communication selon l'une quelconque revendication précédente,
dans lequel le système de circuits est configuré pour

- arrêter la transmission de paramètres d'accès aux canaux communs tels que diffusés,
- recevoir une demande d'association par un troisième dispositif de communication, et
- transmettre une réponse d'association qui contient au moins un paramètre d'accès au canal qui est différent des paramètres d'accès communs en réponse à la demande d'association par le troisième dispositif de communication.

**8.** Premier dispositif de communication selon l'une quelconque revendication précédente,
dans lequel le système de circuits est configuré pour transmettre un ou plusieurs ensembles de paramètres proposés à un deuxième dispositif de communication, chaque ensemble de paramètres comportant un ou plusieurs paramètres d'accès au canal définis individuellement, dans lequel les un ou plusieurs ensembles de paramètres proposés sont transmis par le premier dispositif de communication soit de sa propre initiative, soit à la demande dudit deuxième dispositif de communication, soit à la réception d'un ensemble de paramètres proposé par ledit deuxième dispositif de communication.

**9.** Premier dispositif de communication selon l'une quelconque revendication précédente,
dans lequel le système de circuits est configuré pour

- transmettre de multiples groupes d'ensembles de paramètres proposés à un deuxième dispositif de communication, chaque ensemble de paramètres comportant un ou plusieurs paramètres d'accès au canal définis individuellement et chaque groupe comprenant deux ensembles de paramètres ou plus pour une utilisation dans des conditions différentes, en particulier comportant un ou plusieurs parmi des temps d'utilisation différents, différents types de transmission, différents modes de fonctionnement, un temps restant jusqu'à la délivrance d'une unité de données, une quantité de données à transmettre, un type de données à transmettre et une priorité des données à transmettre.

**10.** Premier dispositif de communication selon l'une quelconque revendication précédente,
dans lequel le système de circuits est configuré pour définir un ou plusieurs paramètres d'accès au canal individuels en tenant compte d'une métrique d'équité, dans lequel la métrique d'équité équilibre l'effet d'un ou plusieurs paramètres d'accès au canal sur un ou plusieurs indicateurs clés de performance.

**11.** Premier dispositif de communication selon l'une quelconque revendication précédente,
dans lequel le système de circuits est configuré pour définir les différents ensembles de paramètres pour différentes liaisons entre le premier dispositif de communication et un deuxième dispositif de communication particulier en tenant compte d'une métrique d'équité, de sorte qu'un critère d'équité est rempli en moyenne sur lesdites différentes liaisons, dans lequel la métrique d'équité équilibre l'effet d'un ou plusieurs paramètres d'accès au canal sur un ou plusieurs indicateurs clés de performance.

**12.** Deuxième dispositif de communication (20) configuré pour fonctionner en tant que station et pour communiquer avec un premier dispositif de communication (10) qui est configuré pour fonctionner en tant que point d'accès, le deuxième dispositif de communication comprenant un système de circuits (21) configuré pour

- recevoir des informations d'accès au canal indiquant si et lesquels parmi un ou plusieurs paramètres d'accès au canal sont définis individuellement et doivent être utilisés à la place des paramètres d'accès au canal communs correspondants,
- recevoir un ou plusieurs paramètres d'accès au canal définis individuellement indiqués par lesdites informations d'accès au canal comme définis individuellement, et
- utiliser lesdits un ou plusieurs paramètres d'accès au canal définis individuellement reçus au lieu d'un ou plusieurs paramètres d'accès au canal communs correspondants.

**caractérisé en ce que** le système de circuits (21) est en outre configuré pour

- recevoir différents ensembles de paramètres du premier dispositif de communication à l'aide d'une ou plusieurs des liaisons différentes entre le premier dispositif de communication et le deuxième dispositif de communication, chaque ensemble de paramètres comportant un ou plusieurs paramètres d'accès au canal définis individuellement.

13. Premier procédé de communication d'un premier dispositif de communication (10) configuré pour fonctionner en tant que point d'accès et pour communiquer avec un ou plusieurs deuxièmes dispositifs de communication (20) qui sont configurés pour fonctionner en tant que station, le premier procédé de communication comprenant

- la transmission d'informations d'accès au canal indiquant à un ou plusieurs des deuxièmes dispositifs de communication si et lesquels parmi un ou plusieurs paramètres d'accès au canal sont définis individuellement pour lesdits un ou plusieurs deuxièmes dispositifs de communication et doivent être utilisés par lesdits un ou plusieurs deuxièmes dispositifs de communication au lieu de paramètres d'accès au canal communs correspondants, et
- la transmission d'un ou plusieurs paramètres d'accès au canal définis individuellement indiqués par lesdites informations d'accès au canal comme définis individuellement auxdits un ou plusieurs deuxièmes dispositifs de communication,

**caractérisé en ce que** le premier procédé de communication comprend en outre

- la définition de différents ensembles de paramètres pour différentes liaisons entre le premier dispositif de communication et un ou plusieurs deuxièmes dispositifs de communication, chaque ensemble de paramètres comportant un ou plusieurs paramètres d'accès au canal définis individuellement, et
- la transmission desdits différents ensembles de paramètres aux deuxièmes dispositifs de communication à l'aide d'une ou plusieurs des liaisons.

14. Second procédé de communication d'un deuxième dispositif de communication (20) configuré pour fonctionner en tant que station et pour communiquer avec un premier dispositif de communication (10) qui est configuré pour fonctionner en tant que point d'accès, le second procédé de communication comprenant

- la réception d'informations d'accès au canal indiquant si et lesquels parmi un ou plusieurs paramètres d'accès au canal sont définis individuellement et doivent être utilisés à la place de paramètres d'accès au canal communs correspondants,
- la réception d'un ou plusieurs paramètres d'accès au canal définis individuellement indiqués par lesdites informations d'accès au canal comme définis individuellement, et
- l'utilisation desdits un ou plusieurs paramètres d'accès au canal définis individuellement reçus au lieu d'un ou plusieurs paramètres d'accès au canal communs correspondants,

**caractérisé en ce que** le second procédé de communication comprend en outre

- la réception de différents ensembles de paramètres du premier dispositif de communication à l'aide d'une ou plusieurs de liaisons différentes entre le premier dispositif de communication et le deuxième dispositif de communication, chaque ensemble de paramètres comportant un ou plusieurs paramètres d'accès au canal définis individuellement.

15. Programme d'ordinateur comprenant un moyen de code de programme permettant d'amener un ordinateur à réaliser

**EP 4 302 555 B1**

les étapes dudit procédé selon la revendication 13 lorsque ledit programme d'ordinateur est mis en place sur un point d'accès ou à réaliser les étapes dudit procédé selon la revendication 14 lorsque ledit programme d'ordinateur est mis en place sur une station.

Fig. 1

Fig. 2

STA 1 | RTS
AP | CTS | ACK
Data
STA 2 | NAV (RTS) | NAV (CTS)
STA 3 | NAV (CTS)

| AC | CWmin | CWmax | AIFSN | TXOP limit | | | | |
| --- | --- | --- | --- | --- | --- | --- | --- | --- |
| | | | | For PHYs defined in Clause 15 (DSSS PHY specification for the 2.4 GHz band designated for ISM applications) and Clause 16 (High rate direct sequence spread spectrum (HR/ DSSS) PHY specification) | For PHYs defined in Clause 17 (Orthogonal frequency division multiplexing (OFDM) PHY specification), Clause 18 (Extended Rate PHY (ERP) specification), Clause 19 (High-throughput (HT) PHY specification), and Clause 21 (Very high throughput (VHT) PHY specification)( M72) | For PHY defined in Clause 22 (Television very high throughput (TVHT) PHY specification) | Clause 2 3 (Sub 1 GHz (S1G) PHY specifica tion(11a h)))(M7 2) | Other PHYs |
| AC_BK | aCWmin | aCWmax | 7 | 3.264 ms | 2.528 ms | 0 | 15.008 ms | 0 |
| AC_BE | aCWmin | aCWmax | 3 | 3.264 ms | 2.528 ms | 0 | 15.008 ms | 0 |
| AC_VI | (aCWmin +1)/2 − 1 | aCWmin | 2 | 6.016 ms | 4.096 ms | 22.56 ms (BCU: 6 or 7 MHz), 16.92 ms (BCU: 8 MHz) | 15.008 ms | 0 |
| AC_VO | (aCWmin +1)/4 − 1 | (aCWmin +1)/2 − 1 | 2 | 3.264 ms | 2.080 ms | 11.28 ms (BCU: 6 or 7 MHz), 8.46 ms (BCU: 8 MHz) | 15.008 ms | 0 |

# Fig. 3

**Fig. 4A**

**Fig. 4B**

**Fig. 5A**

**Fig. 5B**

EP 4 302 555 B1

OBSS case  **Fig. 6A**

IBSS case  **Fig. 6B**

STA ⌐20
⌐21

AP ⌐10
⌐11

**Fig. 7**

L-STA ⌐30
⌐31

100

transmit CA information ⌐101

transmit individual CA parameters ⌐102

**Fig. 8**

200

receive CA information ⌐201

receive individual CA parameters ⌐202

use individual CA parameters ⌐203

**Fig. 9**

EP 4 302 555 B1

Replaces conditionally     Replaces conditionally

Existing
CA params
- ... (yes)

Common
CA params
- ...

Existing
CA params
- ... (no)

STA1      STA2

AP

**Fig. 10A**

302 — AP decides to broadcast (e.g. new) common CA parameters

303 — AP broadcasts common CA parameters

300

301 — STA uses existing (e.g. default) CA parameters

304 — STA receives common CA parameters

305 — STA replaces the existing CA parameters by the ones received from AP if these parameters have not been labelled as "individually updated".

**Fig. 10B**

replaces

Existing
CA params
- ... (yes)
- ... (no)

STA1

Individual CA params
- ... ind. updated yes
- ... ind. updated no

STA2

Existing
CA params
- ... (no)

AP

# Fig. 11A

STA uses existing CA
parameters                                        401

STA receives individual CA
parameters                                        405

STA replaces the existing CA
parameters by the ones received                   406
from AP

STA labels the individual CA
parameters as "individually
updated" if indicated within the                  407
individual CA parameter request

400

AP decides to send (e.g. new)
individual CA parameters to a
STA (unicast) or STA set                 402
(groupcast)

AP decides for each individual
CA parameter if it shall be
replaced by a common CA
parameter update. If not, the            403
AP labels theses CA
parameters as "individually
updated"

AP sends individual CA
parameters in conjunction with           404
"individually updated" label

# Fig. 11B

Replaces conditionally

Replaces conditionally

STA

STA

Replaces

AP

Replaces

L-STA

L-STA

→ Common CA parameter broadcast and related STA action

## Fig. 12A

Replaces

Replaces

STA

STA

Ignores

AP

Ignores

L-STA

L-STA

–·–·→ Individual CA parameter broadcast and related STA action

## Fig. 12B

L-STA                                                    AP

time →

(re)association request →

← Ack

(re)association response →

← Ack

## Fig. 13A

500

AP decides to send individual CA parameters to at least one L-STA ～501

AP stops common CA parameter update via broadcast packet ～502

AP sends disassociation request to the L-STA and awaits (re)association request ～503

AP sends individual CA parameters as the common CA parameters to the L-STA by (re)association response ～504

## Fig. 13B

**Fig. 14A**

**Fig. 14B**

individual CA param set A,
individual CA param set B,
individual CA param set C,
individual CA param set D,
...

AP          STA

time

STA to select a suggested
individual CA param set

decision

# Fig. 15A

individual CA param set A (cond. 1),
individual CA param set A' (cond. 2),
individual CA param set B (cond. 1),
individual CA param set B' (cond. 2),
...

AP          STA

time

STA to select a group of suggested
individual CA param sets

decision

# Fig. 15B

**Fig. 16**

Fig. 17

Fig. 18

- CA params link A P1,A
- CA params link B P1,B
...

- CA params link A P2,A
- CA params link B P2,B
...

Non-AP MLD 1

Non-AP MLD 2

AP MLD

fairness setting
P1,A=P2,B
P2,A=P1,B

link A    link B

# Fig. 19

EP 4 302 555 B1

| Element ID | Length( #4056) | QoS Info | Update EDCA Info(11ah) | AC_BE Parameter Record | AC_BK Parameter Record | AC_VI Parameter Record | AC_VO Parameter Record |
|---|---|---|---|---|---|---|---|

Octets: 1    1    1    1    4    4    4    4

| ACI / AIFSN | ECWmin / ECWmax | TXOP Limit |
|---|---|---|

Octets: 1    1    2

| B0 | B3 | B4 | B5 | B6 | B7 |
|---|---|---|---|---|---|
| EDCA Parameter Set Update Count | | Q-Ack | Queue Request | TXOP Request | Reserved |

Bits: 4    1    1    1    1

## Fig. 20

**EP 4 302 555 B1**

**Patent documents cited in the description**

- US 2010150116 A1
- US 2017202023 A1
- US 2013279427 A1